# EUROPÄISCHE PATENTSCHRIFT

(11) **EP 0 921 969 B1**
(45) Veröffentlichungstag und Bekanntmachung des Hinweises auf die Patenterteilung: **30.10.2002**
(21) Anmeldenummer: 97937482.4
(22) Anmeldetag: 15.07.1997
(51) Int. Cl.: B60T 8/18

(54) **LASTABHÄNGIGER BREMSKRAFTREGLER**
LOAD-DEPENDENT BRAKE-POWER REGULATOR
REGULATEUR DE PUISSANCE DE FREINAGE DEPENDANT DE LA CHARGE

(30) Priorität: 27.08.1996 DE 19634584
(43) Veröffentlichungstag der Anmeldung: 16.06.1999
(73) Patentinhaber: Continental Teves AG & Co. oHG, 60488 Frankfurt (DE)
(72) Erfinder: HARTMANN, Willi, D- 64560 Riedstadt (DE); LUDWIG, Johann, D-61449 Steinbach (DE)
(74) Vertreter: Portwich, Peter
(86) Internationale Anmeldenummer: EP9703766
(87) Internationale Veröffentlichungsnummer: WO98008718

(56) Entgegenhaltungen:
- EP-A- 0 486 342
- EP-A- 0 759 387
- DE-A- 3 741 718
- DE-A- 19 534 453

## Beschreibung

Die vorliegende Erfindung betrifft einen lastabhängigen Bremskraftregler gemäß dem Oberbegriff des Anspruchs 1. Lastabhängige Bremskraftregler, deren Ansteuerung über einen Hebel und eine Feder erfolgt, müssen jeweils den Gegebenheiten des Fahrzeugs, in welches sie eingebaut werden, angepaßt werden. Eine fahrzeugspezifische Größe ist dabei der Abstand zwischen der Befestigung des einen Federendes am Fahrzeug zum Ansteuerhebel. Eine derartige Justierung erfolgt beispielsweise dadurch, daß sich zwischen dem Hebel und dem anderen Federende ein Stift erstreckt, der am Hebel einerseits und an der Feder andererseits zu befestigen ist. Eine der beiden Befestigungen ist axial am Stift verschiebbar. Somit läßt sich den Fahrzeuggegebenheiten entsprechend eine korrekte Stiftlänge einstellen. Bei einer Justage der Stiftlänge ist darauf zu achten, daß der Hebel sich spielfrei im Anschlag am Regelventil befindet. Dies wurde bisher oft manuell vorgenommen, indem der Hebel bis zur Feststellung der zweiten Befestigung im Anschlag festgehalten wurde. Bei Nachlässigkeit können sich jedoch Fehler in der korrekten Einstellung der Stiftlänge einstellen, wenn der Hebel sich nicht in seiner vorgeschriebenen Lage befindet, wenn die Befestigung angebracht wird.

In der EP 0486342B1 wurde daher vorgeschlagen, die variable Befestigung am hebelseitigen Ende des Stiftes vorzusehen, wobei der Stift die Feststellvorrichtung hierzu durchragt und an seinem jenseitigen Ende mit einer Druckfeder versehen ist, die einerseits den Stift und andererseits die Feststellvorrichtung beaufschlagt, welche ihrerseits auf den Hebel wirkt. Eine solche Druckfeder sorgt also automatisch dafür, daß der Hebel in seine vorgeschriebene spielfreie Lage gedrückt wird. Das herausragende Ende des Stiftes ist mit einer Sollbruchstelle zu versehen, so daß nach erfolgter Justierung der Stiftlänge das nun überflüssige Endstück des Stiftes mitsamt der Feder entfernt werden kann. Damit läßt sich nach der Fixierung die Spelausgleichsfeder für weitere Bremskraftregler weiterverwenden.

Nun kann es aber vorkommen, daß ein unvorsichtiger Handgriff bei der Montage oder eine zu starke Erschütterung beim Transport dazu führen, daß das Stiftende schon vor der Fixierung der Stiftlänge abbricht. Dann sind aufwendige Nachbesserungen erforderlich. Zumindest muß der gesamte Stift ausgewechselt werden, bevor der Bremskraftregler in ein Fahrzeug eingebaut werden kann.

Die Aufgabe der vorliegenden Erfindung besteht darin, einen Bremskraftregler der eingangs genannten Art zu schaffen, welcher einen preiswerten automatischen Spielausgleich für den Ansteuerhebel aufweist, aber auch vor der Justierung schon unempfindlich gegen Erschütterungen ist.

Diese Aufgabe wird gelöst in Verbindung mit den kennzeichnenden Merkmalen des Anspruchs 1. Das Prinzip der vorliegenden Erfindung besteht demnach darin, als Spielausgleichelement ein einfaches und preiswertes Gummiband zu verwenden. Als Gummiband werden erfindungsgemäß Bänder elastomeren Materials bezeichnet. Wenn das Gummiband so vormontiert ist, daß es nach der Justage nicht abgezogen werden kann, kann es - falls eine Entfernung überhaupt nötig ist - einfach zerschnitten werden. Der Stift kann wegen der fehlenden Sollbruchstelle also auch bei unsachgemäßer Handhabung nicht zerbrechen.

Nun ist es üblich, als Geräuschdämpfungsmaßnahmen oder zur Zentrierung der Regelkolben an einem Druckstück weitere Druckfedern vorzusehen, welche den Ansteuerhebel derart beaufschlagen, daß er vom Gehäuse des Bremskraftreglers weggedrückt wird. Um auch diese Federkräfte zu kompensieren, ist das Gummiband so zu bemessen, daß es derartige Federn zu überwinden vermag.

Wenn das Gummiband zwischen einer hebelseitigen Feststellvorrichtung an einem starr mit dem hebelseitigen Ende einer als Zugfeder gestalteten Ansteuerfeder verbundenen Stift und der vom Hebel am weitesten entfernten Federwindung aufgespannt ist, darf seine Zugkraft sogar stärker sein als die der Zugfeder, weil diese vom Gummiband nicht in die Länge gezogen werden kann. Zudem ist das Gummiband ohne Beschädigung nach dem Einbau ins Fahrzeug leicht entfernbar.

Bei einer Spannung des Gummibandes zwischen der besagten Feststellvorrichtung und einer am oben beschriebenen Stift angebrachten Schulter muß das Gummiband zwar schwächer sein als die Zugfeder, übt aber nach erfolgter Fixierung der Feststellvorrichtung keinerlei Kräfte auf die Zugfeder aus und kann somit im Fahrzeug verbleiben.

Eine einstückige Fertigung des Stiftes mit der Ansteuerfeder senkt die Montage- und Materialkosten.

Eine nähere Erläuterung des Erfindungsgedankens erfolgt nun anhand der Beschreibung bevorzugter Ausführungsbeispiele in vier Figuren. Es zeigt:
- Fig. 1: einen erfindungsgemäßen Bremskraftregler mit Gummiband als Spielausgleichselement;
- Fig. 2: eine Ansteuervorrichtung für einen erfindungsgemäßen Bremskraftregler mit gegenüber Fig. 1 veränderter Ansteuerfeder und mit Gummiband als Spielausgleichselement;
- Fig. 3: eine Ansteuervorrichtung für einen erfindungsgemäßen Bremskraftregler mit gegenüber Fig. 1 veränderter Ansteuerfeder und mit anders aufgehängtem Gummiband als Spielausgleichselement;
- Fig. 4: eine monatagefreundliche Feststellvorrichtung mit Positionierungsfortsatz für das Gummiband.

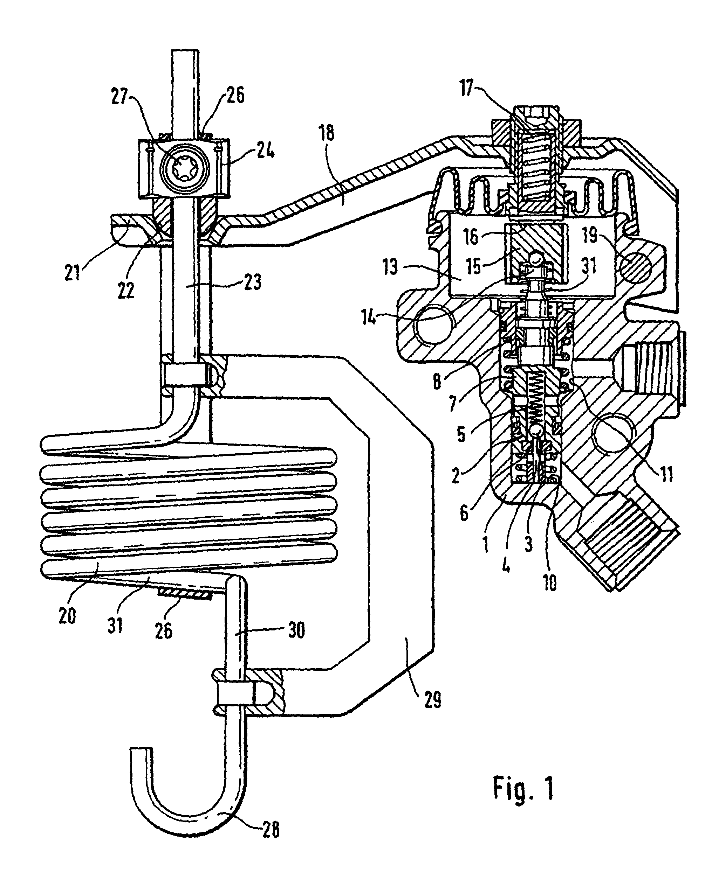

Figur 1 zeigt einen erfindungsgemäßen Bremskraftregler, bereit zum Einbau in ein Fahrzeug.

Bei dem dargestellten Bremskraftregler handelt es sich um einen sog. Twin-Bremskraftregler. D.h., daß in Gehäuse 1 zwei Regelventile 2 vorhanden sind, welche sich deckungsgleich in und hinter der Bildebene befinden. Das dargestellte Regelventil 2 weist ein Schließglied 3 auf, welches von einer Ventilfeder 5 zu einem Ventilsitz 6 hin beaufschlagt wird. Das Schließglied 3 ist vom Ventilsitz 6 abgehoben, da es mit einem Stößel 4 im Anschlag an einer Wand 10 liegt, welche auch den Anschlag für einen Stufenkolben 7 bildet. Der Stufenkolben 7 wird von einer Steuerfeder 8 in Richtung auf diese Wand 10 beaufschlagt. Die Wand 10 ist die Stirnwand einer gestuften Bohrung 11, in deren engerem Abschnitt die größere Stufe des Stufenkolbens 7 abgedichtet aus der Bohrung 11 herausgeführt ist in eine Steuerkammer 13, die druckmittelfrei ist und unter Atmosphärendruck steht. Genauso ist das Regelventil der zweiten, hinter der Bohrung 11 angeordneten Bohrung aufgebaut.

Beide aus den Bohrungen herausgeführten Stufenkolbenenden 14 werden von einem gemeinsamen waagebalkenähnlichen Druckstück 15 in Richtung auf die Wand 10 hin beaufschlagt. Zwischen jedem Stufenkolben 7 und dem Druckstück 15 ist eine jeweils das Stufenkolbenende 14 umgebende Zentrierfeder angeordnet, welche als Druckfeder gestaltet ist. In der Mitte des Druckstücks 15 greift ein Ansteuerstößel 16 an, welcher eine lastabhängige Kraft gleichmäßig auf die beiden Stufenkolben 7 überträgt. Der Ansteuerstößel 16 besitzt eine teleskopartige Anordnung, welche mit einer Geräuschdämpfungsfeder 17 versehen ist. Diese Geräuschdämpfungsfeder 17 ist bestrebt, den Ansteuerstößel zu verlängern, d.h. den Abstand zwischen dem Druckstück 15 und dem Hebel 18, an welchem es befestigt ist, zu vergrößern.

Der Hebel 18 ist über den Lagerbolzen 19 schwenkbar am Gehäuse 1 gelagert. Es handelt sich um einen einarmigen Hebel, so daß sich der Ansteuerstößel 16 und die zur lastabhängigen Ansteuerung dienende Zugfeder 20 auf derselben Hebelseite vom Lagerbolzen 19 aus gesehen befinden. Am Hebelende 21 besitzt der Hebel 18 ein Loch 22, durch welches der Stift 23 geführt ist. In den abgebildeten Ausführungsbeispielen ist der Stift 23 einstückig mit der Zugfeder 20 gefertigt. Dies senkt die Montage- und Materialkosten. An seinem hebelseitigen Ende ist der Stift 23 mit einer Feststellvorrichtung 24 versehen, welche dicker ist als das Loch 22. Die Feststellvorrichtung 24 besitzt eine Feststellschraube 27, welche als Madenschraube gestaltet ist. Diese läßt sich gegen den Stift 23 verschrauben, so daß dieser axial fixiert werden kann. Bei gelöster Schraube 27 kann der Stift 23 frei in der Feststellvorrichtung 24 axial gleiten. Um die Feststellvorrichtung 24 und die am weitesten von dieser entfernten Federwindung 31 ist ein als Gummiring gestaltetes Gummiband 26 gespannt.

Mit ihrem dem Hebel 18 abgewandten Ende 28, welches hakenförmig umgebogen ist, wird die Zugfeder beim Einbau ins Fahrzeug in ein Fahrzeugteil eingehängt, welches relativ zu dem Fahrzeugteil, an welchem das Gehäuse 1 befestigt wird, lastabhängig beweglich ist. Während dieses Vorgangs wird die Zugfeder 20 durch eine Einstellehre 29 in eine definierte Vorspannung gebracht. Dazu ist die Einstellehre 29 mit einem Ende an der Feststellvorrichtung 24 zwischen den beiden äußeren Axialbereichen befestigt, wo die Feststellvorrichtung 24 im Durchmesser verengt ist. Das andere Ende der Einstellehre 29 ist an einem geraden Abschnitt 30 der Zugfeder 20 nahe dem Ende 28 befestigt.

Die Montage des Bremskraftreglers erfolgt dann so, daß das Gehäuse 1 im Fahrzeug befestigt wird und das Ende 28 der Zugfeder 20 eingehängt wird. Das Gummiband übt eine so starke Zugkraft aus, daß es die Geräuschdämpfungsfeder 17 und die der Zentrierung der Stufenkolben 7 am Druckstück 15 dienende Zentrierfeder 31 zu überwinden vermag. Hierdurch stellt sich der Hebel 18 automatisch in die dargestellte Position ein. Die Geräuschdämpfungsfeder 17 und die Zentrierfeder 31 sind komprimiert, so daß der Ansteuerstößel 16 zusammengefahren ist und das Druckstück 15 am Stufenkolben 7 anliegt. Haben alle Elemente ihre Position eingenommen, so daß der Hebel 18 also spielfrei auf die Regelkolben 7 wirkt, wird die Feststellschraube 27 am Stift 23 fixiert. Damit hat das Gummiband 26 seine Funktion erfüllt.

Das Gummiband 26 hat bei dieser Ausführung vor der Fixierung keinen Einfluß auf die Zugfeder 20, darf also auch stärker sein als diese. Allerdings muß es nach erfolgter Fixierung - genauso wie die Einstellehre 29 - entfernt werden, damit bei Einsatz des Bremskraftreglers die lastabhängige Ansteuerung nicht beeinflußt wird. Die Entfernung ist ohne weiteres möglich, ohne den Stift 23 oder das Gummiband zu beschädigen. Die Anordnung ist auch bei starken Erschütterungen bruchsicher, da keine Sollbruchstelle im Stift 23 benötigt wird.

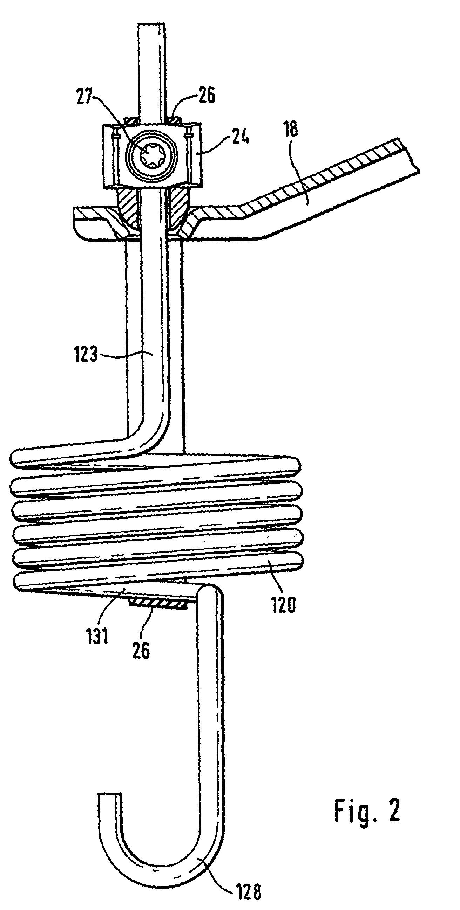

Fig. 2 zeigt eine Ansteuervorrichtung, die die aus Fig. 1 ersetzen kann. Das Gummiband 26 und alle anderen Elemente, die dieselben Bezugszeichen aufweisen wie die in Fig. 1 sind identisch mit Fig. 1. Lediglich die Zugfeder 120 weist durch besondere Fertigung eine innere Vorspannung auf, so daß auf eine Einstellehre zur Eistellung einer Vorspannung verzichtet werden kann. Bezüglich des Einbauvorgangs in ein Fahrzeug wird auf die Beschreibung zu Fig. 1 verwiesen, wobei die Entfernung einer Einstellehre selbstverständlich entfällt.

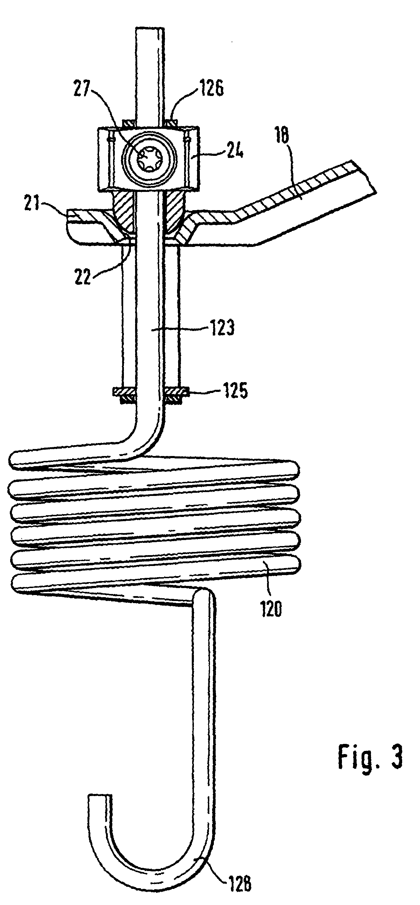

Die Zugfeder 120 nach Fig. 3 entspricht der aus Fig. 2, wobei jedoch die hier veränderte Anbringung des Gummibandes 126 am Stift 123 auch an einer Zugfeder gemäß Fig. 1 durchgeführt werden kann. Zwischen dem Hebel 18 und den Windungen der Zugfeder 120 ist eine Scheibe 125 mit dem Stift 123 verstemmt, die eine radiale Schulter für das Gummiband 126 bildet. Letzteres ist zwischen der Feststellvorrichtung 24 und der Scheibe 125 aufgespannt. Da in diesem Ausführungsbeispiel das Gummiband 126 gegen die Zugfeder 120 wirkt, muß es unbedingt schwächer sein als die Zugfeder 120, damit diese bei Einstellung der Spielfreiheit nicht auseinandergezogen wird. Diese Anordnung hat den Vorteil, daß das Gummiband nach der Fixierung der Feststellschraube 27 wirkungslos ist und somit nicht entfernt werden muß.

Natürlich kann das Gummiband im Prinzip zwischen der Feststellvorrichtung und einer beliebigen Federwindung aufgespannt sein, was aber gegenüber den zuvor beschriebenen Ausführungen keine Vorteile bringt: Das Gummiband muß schwächer sein als die freien Federwindungen, muß aber hinterher entfernt werden, um die umschlungenen Federwindungen freizugeben.

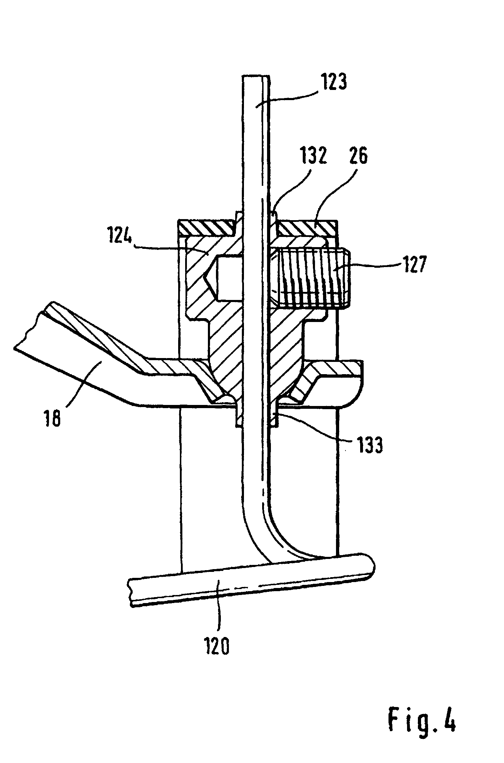

Fig. 4 zeigt eine montagefreundliche Ausführung einer Feststellvorrichtung 124 mit einem axialen Positionierungsfortsatz 132 für das Gummiband 26. Diese Feststellvorrichtung 124 ist an der in Fig. 2 gezeigten Anordnung angebracht, eignet sich aber auch für die anderen Ausführungen.

Der Positionierungsfortsatz 132 durchragt das auf den Stift 123 aufgeschobene Loch des Gummibandes 26 und hat die Aufgabe, das Gummiband 26 in seiner dargestellten Position zu halten, auch wenn beim Einbau des Bremskraftreglers das die Feststellvorrichtung 124 durchragende Ende des Stiftes 123 einmal vorübergehend in die Feststellvorrichtung eintaucht. Hierdurch wird vermieden, daß das Gummiband zwischen Stift 123 und Feststellvorrichtung eingeklemmt wird und eine ordnungsgemäße Einstellung des Bremskraftreglers verhindert.

Ein Führungsfortsatz 133 sorgt dafür, daß beim Einhängen der Feder 120 ins Fahrzeug auch dann ein Entgleiten des Stiftes 123 aus der Feststellvorrichtung 124 verhindert wird, wenn der Stift 123 verhältnismäßig kurz bemessen ist. Bei der Fixierung des Stiftes 123 mit der Feststellschraube 127 wird der Stift 123 vom Gummiband 26 allerdings in eine Position gebracht, in welcher er von der Feststellschraube 127 gefaßt werden kann.

## Patentansprüche

1. Lastabhängiger Bremskraftregler für ein Fahrzeug, mit einem Gehäuse (1), welches an einem ersten Fahrzeugteil befestigt ist, mit einem Hebel (18), der mindestens ein Regelventil (2) beladungsabhängig beaufschlagt, mit einer Ansteuerfeder (20) mit zwei Enden, welche mit ihrem ersten Ende (28) an einem beladungsabhängig relativ zum ersten Fahrzeugteil bewegten zweiten Fahrzeugteil befestigt wird und mit ihrem zweiten Ende mit einem Stift (23) starr verbunden ist, der am Ende (21) des Hebels (18) eingehängt ist, mit einer Feststellvorrichtung (24) zur Fixierung eines fahrzeugspezifischen Abstandes zwischen dem ersten Ende der Ansteuerfeder (20) und der Einhängung am Hebel (18) wobei der Stift (23) mit einem Ende den Hebel (18) und die Feststellvorrichtung (24) durchragt, sowie mit einem Spielausgleichselement (26), **dadurch gekennzeichnet, daß** das Spielausgleichselement ein Gummiband ist, welches stärker ist als die Summe aller zwischen Regelventil (2) und Hebel (18) wirksamen elastischen Mittel (17,31), die dem Gummiband (26) entgegenwirken.

2. Bremskraftregler nach Anspruch 1, **dadurch gekennzeichnet, daß** das Gummiband zwischen einer hebelseitigen Feststellvorrichtung (24) an einem starr mit dem hebelseitigen Ende einer als Zugfeder (20,120) gestalteten Ansteuerfeder verbundenen Stift (23,123) und der vom Hebel am weitesten entfernten Federwindung (31,131) aufgespannt ist.

3. Bremskraftregler nach Anspruch 1, **dadurch gekennzeichnet, daß** das Gummiband zwischen einer hebelseitigen Feststellvorrichtung (24) an einem starr mit dem hebelseitigen Ende einer als Zugfeder (120) gestalteten Ansteuerfeder verbundenen Stift (123) und einer am Stift (123) zwischen Hebel (18) und Zugfeder (120) befestigten Schulter (125) aufgespannt ist

4. Bremskraftregler nach einem der vorhergehenden Ansprüche, **dadurch gekennzeichnet, daß** der Stift (23,123) einstückig mit der Zugfeder (20,120) gefertigt ist.

5. Bremskraftregler nach einem der vorhergehenden Ansprüche, **dadurch gekennzeichnet, daß** die Feststellvorrichtung (124) mit einem Positionierungsfortsatz für das Gummiband versehen ist.

## Claims

1. Load-responsive brake force regulator for a vehicle which includes a housing (1) fastened to a first vehicle part, a lever (18) which acts upon at least one control valve (2) in a load-responsive fashion, an actuating spring (20) with two ends having its first end (28) attached to a second vehicle part which is load-responsively moved in relation to the first vehicle part and its second end rigidly coupled to a pin (23) that is mounted at the end (21) of the lever (18), a fixing device (24) for fixing a vehicle-related distance between the first end of the actuating spring (20) and the point of installation at the lever (18), wherein the pin (23) with its one end projects through the lever (18) and the fixing device (24), and with a clearance compensation element (26),
**characterized in that** the clearance compensation element is a rubber band that is stronger than the sum of all elastic means (17, 31) that are effective between the control valve (2) and the lever (18) and counteract the rubber band (26).

2. Brake force regulator as claimed in claim 1,
**characterized in that** the rubber band is stretched between a lever-side fixing device (24) on a pin (23, 123) which is rigidly coupled to the lever-side end of an actuating spring configured as a tension spring (20, 120), and the spring winding (31, 131) which is most remote from the lever.

3. Brake force regulator as claimed in claim 1,
**characterized in that** the rubber band is stretched between a lever-side fixing device (24) on a pin (123) which is rigidly coupled to the lever-side end of an actuating spring configured as a tension spring (120) and a shoulder (125) attached on the pin (123) between the lever (18) and the tension spring (120).

4. Brake force regulator as claimed in any one of the preceding claims,
**characterized in that** the pin (23, 123) is manufactured integrally with the tension spring (20, 120).

5. Brake force regulator as claimed in any one of the preceding claims,
**characterized in that** the fixing device (124) includes a positioning extension for the rubber band.

## Revendications

1. Régulateur de force de freinage dépendant de la charge, pour un véhicule, comprenant un boîtier (1), qui est fixé à une première partie de véhicule, un levier (18), qui soumet au moins une valve de régulation (2) à une sollicitation en fonction de la charge, un ressort de commande (20) comportant deux extrémités, qui, par sa première extrémité (28), est fixé à une seconde partie de véhicule déplacée vis-à-vis de la première partie de véhicule en fonction de la charge et, par sa seconde extrémité, est relié rigidement à une tige (23) qui est suspendue à l'extrémité (21) du levier (18), un dispositif d'immobilisation (24) servant à fixer une distance propre au véhicule entre la première extrémité du ressort de commande (20) et la suspension sur le levier (18), la tige (23) traversant par une extrémité le levier (18) et le dispositif d'immobilisation (24), et un élément de rattrapage de jeu (26), **caractérisé en ce que** l'élément de rattrapage de jeu est une bande de caoutchouc qui est plus raide que la somme de tous les moyens élastiques (17, 31) agissant entre la valve de régulation (2) et le levier (18), lesquels exercent une action antagoniste à la bande de caoutchouc (26).

2. Régulateur de force de freinage suivant la revendication 1, **caractérisé en ce que** la bande de caoutchouc est tendue entre un dispositif d'immobilisation (24) côté levier, disposé sur une tige (23, 123) reliée rigidement à l'extrémité côté levier d'un ressort de commande réalisé sous forme d'un ressort de traction (20, 120), et la spire de ressort (31, 131) la plus éloignée du levier.

3. Régulateur de force de freinage suivant la revendication 1, **caractérisé en ce que** la bande de caoutchouc est tendue entre un dispositif d'immobilisation (24) côté levier, disposé sur une tige (123) reliée rigidement à l'extrémité côté levier d'un ressort de commande réalisé sous forme d'un ressort de traction (120), et un épaulement (125) fixé sur la tige (123) entre le levier (18) et le ressort de traction (120).

4. Régulateur de force de freinage suivant l'une des revendications précédentes, **caractérisé en ce que** la tige (23, 123) est réalisée d'une seule pièce avec le ressort de traction (20, 120).

5. Régulateur de force de freinage suivant l'une des revendications précédentes, **caractérisé en ce que** le dispositif d'immobilisation (124) est pourvu d'un prolongement de positionnement pour la bande de caoutchouc.
